(19) Europäisches Patentamt
European Patent Office
Office européen des brevets

(11) EP 2 908 424 A1

(12) **EUROPEAN PATENT APPLICATION**

(43) Date of publication:
19.08.2015 Bulletin 2015/34

(51) Int Cl.:
*H02M 7/5387* (2007.01)   *H02M 7/483* (2007.01)

(21) Application number: 14155409.7

(22) Date of filing: 17.02.2014

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ABB Technology AG
8050 Zürich (CH)**

(72) Inventors:
• **Mastellone, Silvia
5412 Gebenstorf (CH)**
• **Peyrl, Helfried
8003 Zürich (CH)**

(74) Representative: **ABB Patent Attorneys
C/o ABB Schweiz AG
Intellectual Property (CH-LC/IP)
Brown Boveri Strasse 6
5400 Baden (CH)**

(54) **Control of an electrical modular multilevel converter with different sample rates**

(57)    A method for controlling an electrical modular multilevel converter (10) comprises receiving control variables (52, 38, 40) based on measurements in the electrical converter (10), determining a state (62) of the electrical converter (10) and control input variables (54, 46) based on a time discrete mathematical model (60) of the electrical converter (10) and the control variables (52, 38, 40), and outputting the control input variables (54) for controlling the electrical converter (10). The control variables (52, 38, 40), the state (62) and the control input variables (54, 46) comprise sample values of different sample rates ($R_1$, $R_2$, $R_3$) and the method further comprises converting sample values of one sample rate into sample values of another sample rate.

Fig. 3

EP 2 908 424 A1

**Description**

FIELD OF THE INVENTION

The invention relates to the field of control of modular multilevel converters. In particular, the invention relates to a method, a computer program and a computer-readable medium for controlling an electrical converter as well as to a controller and an electrical converter system.

BACKGROUND OF THE INVENTION

With increasing computational power, model-based controllers are used more and more for controlling high power electrical modular multilevel converters. Such controllers are based on a mathematical model that encodes the behavior of the electrical converter. Usually, such a mathematical model comprises differential equations, moreover an objective function is used to express the control objective based on which the controller is designed. Based on control variables (such as currents and/or voltages measured in the electrical converter), the differential equations are solved in such a way that the objective function is minimized. In this way, future states and therefrom future control input variables (such as switching states) may be predicted that may be applied to the converter for implementing the control.

In every model-based control, the accuracy of the mathematical model plays a key role in determining the controller performance. In the ideal case, the continuous model of an electrical converter may be described in state space form. In this case, the equations of the mathematical model are also functions of variables associated with the state of the electrical converter.

Following a design phase, the controller is finally implemented in a digital platform, with an appropriate sampling rate. As the electrical converter is by nature analog, the measured signals (e.g. currents and voltages), as well as the actuation commands (for example gating signals), have to pass through A/D (analog/digital), D/D (digital/digital), D/A (digital/analog) interfaces between the digital controller and the converter. Typically, the controller designer does not have the freedom of choosing the sampling rates of controller and signals.

DESCRIPTION OF THE INVENTION

It is an objective of the invention to control an electrical modular multilevel converter taking different sample rates into account. It is a further objective of the invention to enhance the control performance of an electrical converter.

These objectives are achieved by the subject-matter of the independent claims. Further exemplary embodiments are evident from the dependent claims and the following description.

An aspect of the invention relates to a method for controlling an electrical converter. An electrical converter may be an electrical device adapted for converting a current of a first frequency into a current of a second frequency. The first and/or second frequency may be zero, i.e. the converter may be an AC/AC, AC/DC, DC/AC or DC/DC converter. It also may be possible that the converter has a multi-phase input and/or a multi-phase output.

The electrical converter may be a high power converter, i.e. may be adapted for converting current of more than 100 A and/or more than 1000 V.

The electrical converter may be used to drive an electrical machine, such as an electrical motor, to supply the electrical power generated by a generator into an electrical grid or to interconnect two electrical grids.

The electrical converter may be part of a plant, which additionally to the converter may comprise the electrical machine, devices driven by the electrical machine or driving the electrical machine (such as pumps, turbines, etc.). Also the converter system comprising the converter and a controller implementing the method may be a part of the plant.

According to an embodiment of the invention, the method comprises receiving reference variables and/or control variables based on measurements in the electrical converter, determining a state of the electrical converter and control input variables based on a time discrete mathematical model of the electrical converter and the control variables, outputting the control input variables for controlling the electrical converter, wherein the control variables, the state and the control input variables comprise sample values of different sample rates and the method further comprises converting sample values of one sample rate into sample values of another sample rate.

It has to be understood that the control input variables, the control variables and the state may be vectors of sample values. Control variables may be seen as values that are received from the converter and/or the plant (i.e. that are output from the device to be controlled and therefore also may be called control output variables) and control input variables may be seen as values that are sent to the converter (i.e. that are input to the device to be controlled).

With the method, a model-predictive control is performed, i.e. the method determines an actual state and future states from the control variables with the aid of a mathematical model that is evaluated. The future states are determined in such a way that specific control objectives are met, for example that the currents and/or voltages in the converter follow reference currents and/or voltages, that switching losses are minimized, that capacitor voltages in cell capacitors are balanced, etc.

The mathematical model is a time discrete mathematical model, i.e. the states of the converter and/or the plant are calculated for discrete time steps. For example, the mathematical model comprises recurrence equations (derived from differential equations) with which the state at the next time step may be calculated from the previous time step.

The time stepping of the mathematical model, i.e. the sample rate of the mathematical model, may be different from the time stepping of the control variables and/or control input variables, i.e. the sample rate of the control variables and/or input variables.

Furthermore, the mathematical model and in particular the state may comprise variables of different time stepping. For example, the mathematical model may model fast and slow dynamics, which are evaluated with fast and slow sample rates.

All these different sample rates are accounted by the control method. In particular, the control method converts sample values of one sample rate into sample values of another sample rate. For example, when reducing the sample rate by one half, only every second sample value of the faster sample rate may become a sample value of the slower sample rate. In general, a converter for converting sample rates may interpolate between sample values (for example linearly or more complicated with splines) to convert sample values of one sample rate into another sample rate.

For example, the electrical converter may be a M2LC converter (modular multi-level converter). Such a converter usually has two branches per phase, wherein each branch has at least two converter cells. Each converter cell has a cell capacitor.

With the control method, the model accuracy may be enhanced by accounting for the digital implementation of the controller, which implements the control method, and the interfaces of the controller with the electrical converter.

The control method allows for accurately modelling the dynamic behavior of the electrical converter, while accounting for the subsystems operation bandwidth, i.e. charging and discharging of the capacitors versus switching frequencies. This reflects in the different scaling of the dynamics of the current loop versus balancing control.

The control method may account for digital implementation constraints including computational frequency, i.e. a model update rate, sensor sampling rates and actuator sampling rates. This may minimize the gaps between initial design performance and final controller performance on the system.

The control method allows for operating different parts of the system in the appropriate bandwidth while avoiding exciting parts that can create trouble while keeping track of the coupling. This results in control improved performance.

The control method may reduce computational load of classical model-predictive control based solution as it reduces the unnecessary fast sampling for slower dynamics.

According to an embodiment of the invention, the control variables are sampled with different sample rates and at least some of the control variables of one sample rate are converted to a sample rate of other control variables. For example, the time stepping or sample rate of the control variables may be based on the sample rates of the sensors producing digital measurement values or D/A-converters connected to sensors. The measurement values may be acquired by sensors of different sample rates and/or the sensors may be connected with D/A-converters having different sample rates. For example, a D/D-converter may convert measurement values of a slower sample rate into the highest sample rate of all measurement values.

According to an embodiment of the invention, the control variables are sampled with a first sample rate and converted into a second sample rate and the state and the control input variables are determined with the second sample rate. It also may be possible that the sample rate of the variables of the mathematical model (such as the state) is faster or slower as the sample rate of specific measurement values. In this case, a D/D-converter may convert the control variables based on these measurement values into the sample rate of the mathematical model, before the mathematical model is evaluated.

According to an embodiment of the invention, the control input variables are converted from the second sample rate to a third sample rate. The time stepping or sample rate of the control variables may be dependent on the gating units of the electrical converter, which may have to be controlled with a different sample rate as is used for evaluating the mathematical model. A further D/D-converter may convert the control input variables into a sample rate suitable for the gating units.

According to an embodiment of the invention, the control variables comprise measurement values of voltages and/or currents in the electrical converter and/or the control input variables comprise switching signals for the electrical converter. With the control method, the switching signals for the electrical converter may be determined from measurements in the electrical converter.

According to an embodiment of the invention, the mathematical model comprises a sampling operator for converting sample values of one sample rate into sample values of another sample rate. A D/D-converter in the controller may be modelled with an operator implemented in the controller that converts between sample values of different sample rates. Such a sampling operator may be a time dependent matrix which is multiplied with a series of sample values of one rate, which results in a series of sample values of another sample rate.

According to an embodiment of the invention, the sampling operator is periodically varying over time with one of the sample rates. Time-varying periodic matrices may be used to introduce input and output signal updates at different rates. As a simple example, the matrix may be 1 at a first time step and may be 0 for a fixed number of subsequent time steps after that the matrix again may be 1 for one time step, etc. In such a way, when the matrix is multiplied with control variables which have a sample rate corresponding to the fixed number of time steps, these variables are only taken into account at the first time step and not any more at the subsequent time steps.

According to an embodiment of the invention, the state and the control input variables are determined from the mathematical model with a specific sample rate, which is adapted to a periodicity of the state, such that the mathematical model is mapped to a time invariant model at the specific sample rate. In other words, the sample rate or the time stepping of the mathematical model may be chosen such that a time step is as long as a period of the modelled state. Consider a state that has the form of a sine function. In this case, the sample rate may be adapted to the period of the sine function.

For example, when a linear time invariant mathematical model is used to model the converter and/or the plant, a linear time varying (LTV) model may be mapped to a linear time invariant (LTI) representation. The controller may be designed in a simpler space and mapped back to the original form.

According to an embodiment of the invention, after determination by the mathematical model, the control input variables are converted from a sample rate of the mathematical model to a control input sample rate to be input to the electrical converter and the mathematical model accounts for the control input sample rate in such a way that switching states of the converter are only changeable with the control input sample rate.

As already described, it may be possible that the sample rate, which is used for evaluating the mathematical model, is higher (faster) than the sample rate of the control input variables. In such a case, the switching state of the electrical converter can only be changed with the sample rate of the control input variables. The mathematical model may account for this by taking into account that the internal state of the converter may only be changed with the slower sample rate of the control input variables, i.e. that no intermediate switching states are possible. In other words, a move blocking technique may be used to regulate the different controller rates.

According to an embodiment of the invention, the state comprises state variables of a first sample rate and state variables of a second sample rate. The mathematical model may model a faster and a slower dynamics of the converter with two different sets of equations and associated state variables. These two different sets of equations may be evaluated with two different sample rates adapted to the speed of the variations of the corresponding dynamics. For integrated design techniques, the state space can be partitioned and sampled at different rates.

According to an embodiment of the invention, state variables of a first sample rate are converted to the second sample rate and/or vice versa. In the case, one dynamics influences the other dynamics, the corresponding state variables may be converted to a sample rate such that they may be input to the other set of equations.

According to an embodiment of the invention, the mathematical model is based on at least one of a set of first equations relating the time derivate of the state with a function of the control input variables and the state, a set of equations relating the control input variables with the state, and an objective function of the state and/or the control input variables to be minimized, when determining the state.

A general representation of a mathematical model that encompasses most of the available models is the following:

$$dx/dt = A(t,x,u) + Gv$$

$$y = Cx,$$

with the state x, control inputs u, exogenous control inputs v and control outputs y.

If one considers an M2LC converter as example, the state x may depend on a specific choice of variables, current and voltages of the converter. The control input variables u may be the gate signals or the voltage vector in the capacitors (depending if we are designing a current controller or a balancing controller) and the exogenous control inputs v may be the DC link voltage. The control outputs y may be the load current and the circulating currents. The state, the control outputs and control inputs may be vectors of single values.

For an M2LC converter, the control objectives, which may be modelled with the objective function, are typically providing the desired load current while preserving acceptable values of circulating currents which are defined as linear combinations of the arm currents.

The control design may be performed on a continuous model yielding a continuous controller that must be discretized in the implementation phase. Alternatively, the controller may be designed based on the discretized system model. Finally, the discrete controller may be designed based on the more realistic system configuration that includes a continuous model for the converter and sample and hold elements.

A further aspect of the invention relate to a computer program, which, when being executed by a processor, is adapted for performing the steps of the method as described in the above and in the following and to a computer-readable medium on which such a computer program is stored. A computer-readable medium may be a floppy disk, a hard disk, an USB (Universal Serial Bus) storage device, a RAM (Random Access Memory), a ROM (Read Only Memory) and an EPROM (Erasable Programmable Read Only Memory). A computer-readable medium may also be a data communication network, e.g. the Internet, which allows downloading a program code.

A further aspect of the invention relates to a controller for controlling an electrical converter. Such a controller may have interfaces to sensors in the electrical converter for receiving control variables and/or for providing control input variables to the gating units that switch the semiconductor switches of the converter.

According to an embodiment of the invention, the controller is adapted for performing the steps of the method as described in the above and in the following, i.e. the control method may be implemented in the controller.

The controller may be based on model predictive control with a converter and/or plant model that accounts for the subsystems operation bandwidths (such as sample rates of sensors and/or gating units) and reflects different time-scales of the dynamics of the current control loop and the balancing control loop. The mathematical model implemented in the controller may account for digital implementation constraints including computational frequency, i.e. a model update rate, sensor sampling rates and actuators sampling rates. The controller may use a prediction method to obtain the input behaviors and the control effect at future instants, compensating for the delays in the controller application.

According to an embodiment of the invention, the controller is a cascaded controller, comprising a first sub-controller receiving measurement values as first control input variables from the electrical converter and determining first input variables, a second sub-controller receiving the first input variables as second control variables, wherein the first sub-controller and the second sub-controller have different sample rates. At least one of the first sub-controller and the second sub-controller may be adapted for performing the method as described in the above and in the following. In particular, the control input from the first sub-controller, which is the control output for the second sub-controller may be converted from the sample rate of the first sub-controller to the sample rate of the second sub-controller.

For example, the first sub-controller may be a current controller and may regulate a current and may determine reference voltages for a capacitor. The second sub-controller may be a balancing controller and may determine the gating signals for a given voltage reference. In this case, the two dynamics of the sub-controllers are operating in different bandwidths and are therefore decoupled in time.

According to an embodiment of the invention, the controller comprises a processor, a DSP and/or an FPGA. Considering the embodiment with two sub-controllers, the different sub-controllers may be implemented at different sample rates in different parts of a digital controller: the current controller may be implemented in a CPU in the millisecond range, the balancing controller is typically implemented on an FPGA in the microsecond range.

A further aspect of the invention relates to an electrical converter system, which comprises a controller as described above and in the following and an electrical converter adapted for converting an input current into an output current, while being controlled by the controller. In particular, the electrical converter may be a modular multi-level converter, for example an AC/DC (active front end) or DC/AC (power inverter) M2LC converter.

It has to be understood that features of the method as described in the above and in the following may be features of the computer program, computer-readable medium, controller and the system as described in the above and in the following as well as vice versa.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 schematically shows an M2LC converter that may be controlled with a method according to an embodiment of the invention.

Fig. 2 schematically shows an electrical converter system according to an embodiment of the invention.

Fig. 3 schematically shows a controller according to an embodiment of the invention.

Fig. 4 shows a flow diagram for a method for controlling an electrical converter according to an embodiment of the invention.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

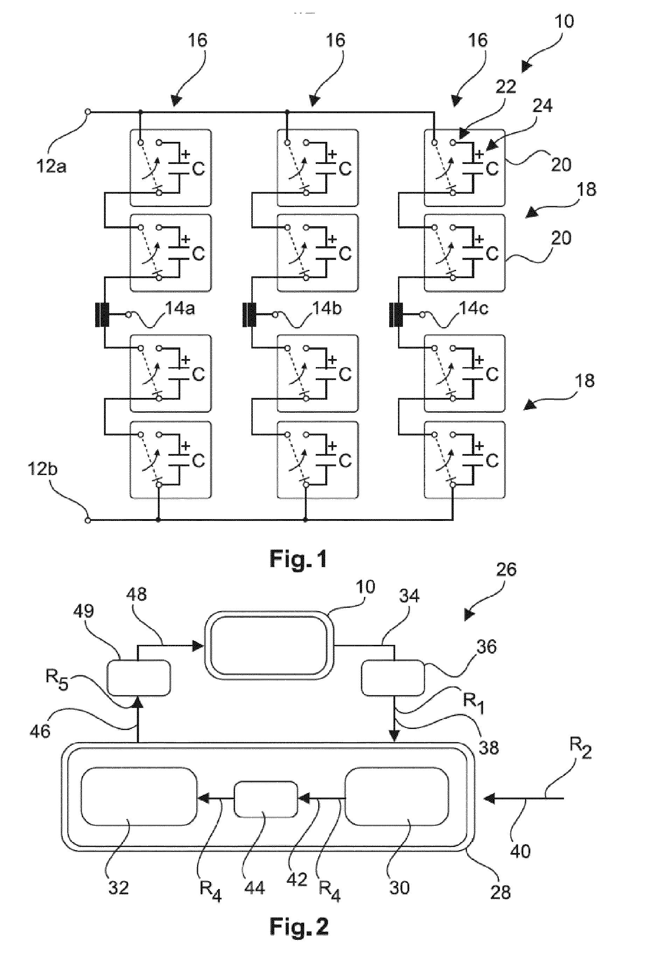

Fig. 1 shows an M2LC converter 10 for converting a DC current between inputs 12a, 12b into three AC currents provided at the phase outputs 14a, 14b, 14c. For each phase 16 or arm 16, the converter 10 comprises two branches 18, which are connecting the inputs 12a, 12b in series and provide the respective output 14a, 14b, 14c between them. Each branch 18 comprises at least two converter cells 20, which comprise a semiconductor switch 22 and a cell capacitor 24.

The converter 10 enables AC/DC and DC/AC voltage conversion above the usual upper threshold of about 6 kV AC, which usually is the maximum voltage rating for other power converter topologies. The voltage rating of the M2LC converter 10 may reach voltages as high as 20 kV by allowing series connection of converter cells 20. As a result, transformers or complex snubber circuits are no longer required for power conversion. Moreover, since the increase of the power is done through a voltage increase, the efficiency may go up to 99%.

The converter 10 has a multi-level topology, since each phase 16 comprises multiple converter cells 20 that allow producing output voltage waveforms of multiple levels. As the number of converter cells 10 increases, the quality of the output voltage waveforms also increases allowing to better approximate sinusoidal voltage waveforms, as is desired in AC applications.

The structure of the converter 10 is modular, since the series-connected converter cells 20 may all have a relatively low voltage rating, e.g. 1 kV and all converter cells 20 may be identical. This offers the advantage to use inexpensive semiconductor switches 22 of reduced voltage blocking capability such as 1.7-kV IGBTs. Modularity also enables fault tolerance, as redundant converter cells 20 may be added at low cost.

The complexity of the topology that provides the described series of benefits requires however nontrivial control solutions to guarantee the correct operation. With the control method accounting for multiple sample rates as described above and in the following it is possible to achieve superior control performance at minimal computational complexity.

A control objective for the converter 10 is to track given active/reactive reference currents for active/reactive power control while keeping the capacitor voltages of the cells at their nominal values.

Depending on the application, the outputs 14a, 14b, 14c of the converter 10 are connected to a power grid (active front end operation) or to a load (power inverter application). The phase currents have to be measured periodically and controlled to their set point values.

Each converter cell 20 may be equipped with a capacitor 24 of electrolytic or film type. This capacitor 24 acts as a storage element of a DC voltage. Inserting / bypassing the capacitors 24 with the semiconductor switch 22 allows impressing the various voltage levels at the outputs 14a, 14b, 14c of the converter 10. The voltage of each of the capacitors 24 usually has to be controlled around a reference value, which is equal to the voltage of the DC link (between the inputs 12a, 12b) that feeds the converter 10 divided by the number of converter cells 20 in the branch 18 (half-phase).

Furthermore, M2LC-internal electrical quantities, such as the branch energies, may have to be controlled. Energy exchange between two branches 18 of a phase 16 may be required to allow producing a current at the output terminals. This procedure may have to be controlled such that desired current components are generated, while current harmonics that exert stress on the semiconductor switches 22 are minimized. This objective is sometimes cited as "control of circulating currents".

Fig. 2 shows a converter system 26 comprising the converter 10 and a controller 28 for controlling the converter 10.

Measured analog currents 34 are sampled with an A/D-converter 36 with a first sample rate $R_1$. These first control variables 38 are provided to the controller 28. Reference values, power or current can be possibly sampled at a different sample rate $R_2$ and are provided to the controller 28 as second control variables 40.

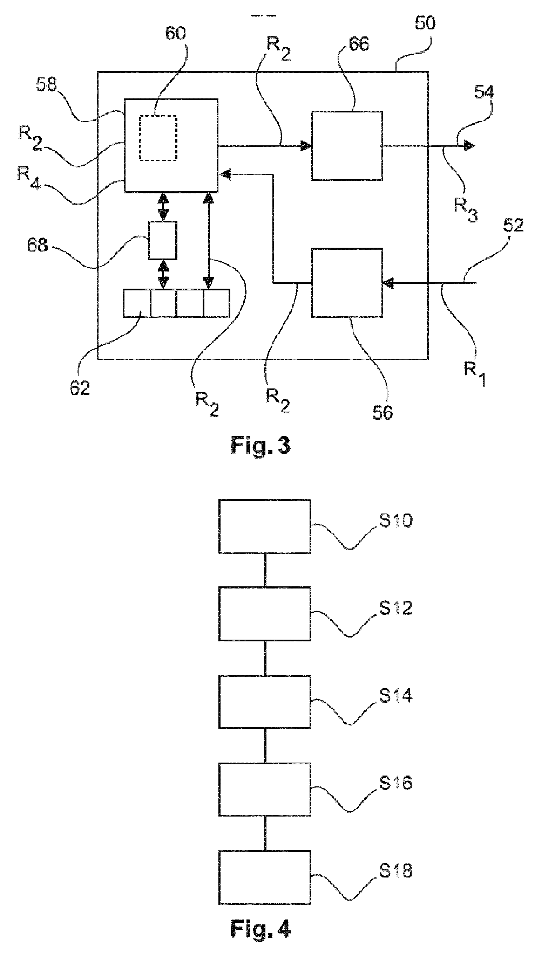

The converter 10 is controlled by a cascade of sub-controllers 30, 32. The current controller 30 tracks given reference currents for active and reactive power. It receives the control variables 38, 40 of different sample rates and determines voltage references 42. The voltage references 42 may be determined with model-predictive control, for example as described with reference to Fig. 3. The voltage references 42 may have a further sample rate $R_3$, for example the sample rate $R_1$, $R_2$ of the control variables 38 or the control variables 40.

A D/D converter 44 between the current controller 30 and the balancing controller 32 changes the sample rate $R_3$ of the voltage references 42 to a further sample rate $R_4$. Alternatively, this change of sample rate may be performed by the sub-controller 30 or the sub-controller 32.

The voltage references 42 with the sample rate $R_4$ is provided to the balancing controller 32, which may use a redundancy in converter states for balancing the capacitor voltages. For example, the converter cells 20 with lowest capacitor voltage are prioritized for charging while the converter cells 20 with the highest voltage levels are chosen for discharging currents. The balancing controller 32 determines gating signals as control input variables 46. The gating signals 46 may have a sample rate $R_5$.

Also, the gating signals 46 may be determined with model-predictive control, for example as described with reference to Fig. 3.

In the end, the gating signals 46 are converted to analog signals 48 with a D/A converter 49 that are applied to the converter 10. For example, a set of buffers in the sub-controller 32 may function as a hold device and may provide a continuous time signal to the converter 10.

Fig. 3 schematically shows a controller 50, which receives control variables 52 (which may comprise an external signal and/or a reference variable) with a sample rate $R_1$ and generates control input variables 54 with a sample rate $R_3$. For example, the sub-controller 30, 32 or another embodiment of the controller 28 may function as the controller 50. It has to be noted that the sample rates of Fig. 3 need not be the sample rate of Fig. 2. As an example, the voltage reference 42 with sample rate $R_4$ in Fig. 2 may be associated with the control t variable 52 with sample rate $R_1$ of Fig. 3. Also, the gating signals 46 with sample rate $R_5$ of Fig. 2 may be associated with the control input variables 54 with sample rate $R_3$ of Fig. 3.

The controller 50 comprises a D/D-converter 56 for converting the control variables 52 with the sample rate $R_1$ into control variables with a sample rate $R_2$.

A solver 58 of the controller 50 receives the control variables 52 with the sample rate $R_2$ and determines the control input variables 54 with sample rate $R_2$. The solver 58 evaluates a time discrete mathematical model 60 for determining actual and future states 62 of the converter 10 and for determining the control input variables 54.

The control input variables 54 with sample rate $R_2$ are converted to the sample rate $R_3$ with a further D/D converter 64.

The solver may evaluate the mathematical model 60 with the sample rate $R_2$. It may be possible that parts of the mathematical model 60 (for example belonging to a faster or slower dynamics) are evaluated with another sample rate $R_4$ and also that state variables 62 have a sample rate $R_4$. In this case, a further D/D converter 66 may convert state variables 62 with sample rate $R_2$ into convert state variables 64 with sample rate $R_4$ and vice versa.

It is also possible to formulate the mathematical model 60 in such a way that it includes the D/D-converters 56, 66. In a linear time varying form it may be represented as

$$dx/dt = A(t, x, Hu_k) + GHv_k$$

$$y_k = Sx,$$

where S and H are sample operators characterized by different rates. $u_k$ is the discrete control input 54 to be designed based on sampled values of the state x and outputs $y_k$ and exogenous inputs $v_k$.

In the control design phase, the system may be designed using continuous dynamics or the equivalent discrete dynamics. In both cases, the controller 50 is finally based on function of the discrete values of the state x, outputs y and exogenous input v

$$u_k = F(x_i, y_j, v_l)$$

where the discrete values $x_i$, $y_j$, $v_k$ are respectively sampled at different sample rates $R_1$, $R_2$, $R_3$.

Fig. 4 shows a flow diagram for controlling the converter 50.

In step S10, control variables 52 based on measurements in the electrical converter 10 are received in the controller 50. The control variables 52 may be sampled with a first sample rate $R_1$.

In step S12, the control variables 52 are converted into a second sample rate $R_2$ by the D/D converter 56.

In step S14, a state 62 of the electrical converter 10 and control input variables 54 are determined by the solver 58 based on a time discrete mathematical model 60 of the electrical converter 10 and the control variables 52. The state 62 and the control input variables 54 may be determined with the second sample rate $R_2$.

In step S16, the control input variables 54 are converted from the second sample rate $R_2$ to a third sample rate $R_3$ by the D/D converter 66.

In step S18, the control input variables 54 are output for controlling the electrical converter 10.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| | |
|---|---|
| 10 | converter |
| 12a, 12b | input |
| 14a, 14b, 14c | output |
| 16 | phase |
| 18 | branch |
| 20 | converter cell |
| 22 | switch |
| 24 | cell capacitor |
| 26 | converter system |
| 28 | controller |
| 30, 32 | sub-controller |
| 34 | measured currents |
| 36 | A/D converter |
| 38, 40 | control variables |
| 42 | voltage references |
| 46 | control input variables |
| 48 | gating signals |
| $R_1, R_2, R_3, R_4, R_5$ | sample rates |
| 50 | controller |
| 52 | external signal/reference |
| 54 | control input variables |
| 56 | D/D converter |
| 58 | solver |
| 60 | mathematical model |

| 62 | state variables |
|----|-----------------|
| 64 | D/D converter |
| 66 | D/D converter |

**Claims**

1. A method for controlling an electrical converter (10), the method comprising:

   receiving control variables (52, 38, 40) based on measurements in the electrical converter (10);
   determining a state (62) of the electrical converter (10) and control input variables (54, 46) based on a time discrete mathematical model (60) of the electrical converter (10) and the control variables (52, 38, 40);
   outputting the control input variables (54) for controlling the electrical converter (10); wherein the control variables (52, 38, 40), the state (62) and the control input variables (54, 46) comprise sample values of different sample rates ($R_1$, $R_2$, $R_3$) and the method further comprises:

   converting sample values of one sample rate into sample values of another sample rate.

2. The method of claim 1,
   wherein the control variables (38, 40) are sampled with different sample rates and at least some of the control variables of one sample rate are converted to a sample rate of other control variables.

3. The method of claim 1 or 2,
   wherein the control variables (52) are sampled with a first sample rate ($R_1$) and converted into a second sample rate ($R_2$);
   wherein the state (62) and the control input variables (54) are determined with the second sample rate ($R_2$);
   wherein the control input variables (54) are converted from the second sample rate ($R_2$) to a third sample rate ($R_3$).

4. The method of one of the preceding claims,
   wherein the control variables (54, 38, 40) comprise measurement values of voltages and/or currents in the electrical converter; and/or
   wherein the control input variables (54, 46) comprise switching signals for the electrical converter.

5. The method of one of the preceding claims,
   wherein the mathematical model (60) comprises a sampling operator for converting sample values of one sample rate into sample values of another sample rate; and/or wherein the sampling operator is a time-periodic function, varying with one of the sample rates.

6. The method of one of the preceding claims,
   wherein the state (62) and the control input variables (54, 46) are determined from the mathematical model (60) with a specific sample rate ($R_2$), which is adapted to a periodicity of the state, such that the mathematical model is mapped to a time invariant model at the specific sample rate.

7. The method of one of the preceding claims,
   wherein, after determination by the mathematical model (60), the control input variables (54) are converted from a sample rate ($R_2$) of the mathematical model (60) to a control input sample rate ($R_3$) to be input to the electrical converter (10); wherein the mathematical model (60) accounts for the control input sample rate ($R_3$) in such a way that switching states of the converter (10) are only changeable with the control input sample rate.

8. The method of one of the preceding claims,
   wherein the state (62) comprises state variables of a first sample rate ($R_2$) and state variables of a second sample rate ($R_4$);
   wherein state variables (62) of a first sample rate are converted to the second sample rate.

9. A computer program, which, when being executed by a processor, is adapted for performing the steps of the method of one of claims 1 to 8.

10. A computer-readable medium on which a computer program according to claim 9 is stored.

11. A controller (28, 30, 32, 50) for controlling an electrical converter,
    wherein the controller is adapted for performing the steps of the method of one of claims 1 to 8.

12. The controller (28) of claim 11, wherein the controller is a cascaded controller, comprising:

    a first sub-controller (30) receiving measurement values as first control input variables (38, 40) from the electrical converter (10) and determining first input variables (42);
    a second sub-controller (32) receiving the first input variables (42) as second control variables;
    wherein the first sub-controller (30) and the second sub-controller (32) have different sample rates.

13. The controller (28, 30, 32, 50) of claim 11 or 12,
    wherein the controller comprises a processor, a DSP and/or an FPGA.

14. An electrical converter system (26), comprising:

    a controller (28, 30, 32, 50) according to one of claims 11 to 13,
    an electrical converter (10) adapted for converting an input current into an output current, while being controlled by the controller.

15. The electrical converter system (26) of claim 14,
    wherein the electrical converter (10) is a modular multi-level converter.

**Fig. 1**

**Fig. 2**

**Fig. 3**

**Fig. 4**

Application Number

EP 14 15 5409

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FARD RAZIEH NEJATI ET AL: "Analysis of a Modular Multilevel inverter under the predicted current control based on Finite-Control-Set strategy", 2013 3RD INTERNATIONAL CONFERENCE ON ELECTRIC POWER AND ENERGY CONVERSION SYSTEMS, IEEE, 2 October 2013 (2013-10-02), pages 1-6, XP032550893, DOI: 10.1109/EPECS.2013.6713046 [retrieved on 2014-01-15] * abstract * * figures 1,2 * * page 1 - page 3 * | 1-15 | INV. H02M7/5387 H02M7/483 |
| X | JIANGCHAO QIN ET AL: "Predictive control of a three-phase DC-AC Modular Multilevel Converter", ENERGY CONVERSION CONGRESS AND EXPOSITION (ECCE), 2012 IEEE, IEEE, 15 September 2012 (2012-09-15), pages 3500-3505, XP032467311, DOI: 10.1109/ECCE.2012.6342494 ISBN: 978-1-4673-0802-1 * page 3500 - page 3502 * | 1-15 | |
| A | SMITH J O ET AL: "A FLEXIBLE SAMPLING-RATE CONVERSION METHOD", INTERNATIONAL CONFERENCE ON ACOUSTICS, SPEECH & SIGNAL PROCESSING. ICASSP. SAN DIEGO, MARCH 19 - 21, 1984; [INTERNATIONAL CONFERENCE ON ACOUSTICS, SPEECH & SIGNAL PROCESSING. ICASSP], NEW YORK, IEEE, US, vol. 2, 1 March 1984 (1984-03-01), pages 19.4.01-19.4.04, XP000946290, * page 1 * | 1-15 | TECHNICAL FIELDS SEARCHED (IPC) H02M G05B |

-/--

The present search report has been drawn up for all claims

| Place of search | Date of completion of the search | Examiner |
|---|---|---|
| The Hague | 11 July 2014 | Lochhead, Steven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

# EUROPEAN SEARCH REPORT

Application Number

EP 14 15 5409

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Chapter 1: Systems, modeling and model predictive control" In: Bao-Cang, Ding: "Modern Predictive Control", 2009, CRC Press, U.S.A., XP002726830, ISBN: 978-1-4200-8530-3 pages 1-36, * page 1 - page 36 * | 1-15 | |

TECHNICAL FIELDS
SEARCHED     (IPC)

The present search report has been drawn up for all claims

| Place of search | Date of completion of the search | Examiner |
|---|---|---|
| The Hague | 11 July 2014 | Lochhead, Steven |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)